# EUROPEAN PATENT APPLICATION

(11) **EP 4 838 635 A1**
(43) Date of publication of application: **11.11.2026**
(21) Application number: 24942320.3
(22) Date of filing: 08.08.2024
(51) Int. Cl.: H01M 10/659, H01M 10/613, H01M 10/615, H01M 10/617, H01M 10/6557, H01M 10/625

(54) **BATTERY AND ELECTRIC DEVICE**

(30) Priority: 07.06.2024 CN 202421300313 U
(71) Applicant: Contemporary Amperex Technology Co., Limited, Ningde, Fujian 352100 (CN)
(72) Inventor: SONG, Feiting, Ningde, Fujian 352100 (CN); WU, Qiaoyun, Ningde, Fujian 352100 (CN)
(74) Representative: Lorenz Seidler Gossel Part. mbB
(86) International application number: PCT/CN2024/110605
(87) International publication number: WO 2025/251413

(57) **Abstract**

A battery and an electric device. The battery comprises: a case (10), which is provided with an accommodating cavity (101); a battery assembly (20), which is arranged inside the accommodating cavity (101); a thermal management component (30), which is configured to heat and cool the battery assembly (20), wherein the thermal management component (30) comprises second heat exchangers (32), the second heat exchangers (32) being arranged between the battery assembly (20) and the top wall and/or bottom wall of the accommodating cavity (101); and a phase change material component (40), which extends in the circumferential direction of the battery assembly (20) and is arranged on the peripheral side of the battery assembly (20), thereby exchanging heat with battery cells (211) on the peripheral side of the battery assembly (20).

## Description

### CROSS-REFERENCE TO RELATED APPLICATIONS

This application claims priority to Chinese Patent Application No. 202421300313.4, filed on June 7, 2024, which is incorporated herein by reference in its entirety.

### TECHNICAL FIELD

This application relates to the field of battery technologies, and in particular, to a battery and an electric device.

### BACKGROUND

Currently, to ensure normal operation and service life of a battery, a heat exchange member is typically disposed inside the battery. The heat exchange member can exchange heat with battery cells to regulate the temperature of each battery cell, thereby ensuring the service life of the battery. However, at present, the temperature uniformity of the plurality of battery cells in a battery pack needs to be further improved.

### SUMMARY

This application is intended to resolve at least one of the technical problems in the prior art. In view of this, this application provides a battery and an electric device including the battery. The battery can reduce the temperature change rate of battery cells on a peripheral side of a battery assembly and make the temperature change rates of various portions of the battery assembly tend to be consistent, thereby improving the temperature uniformity of the battery assembly and prolonging the service life of the battery.

According to a first aspect, the embodiments of this application provide a battery, including: a box, where the box has an accommodating cavity; a battery assembly, where the battery assembly is disposed in the accommodating cavity; a thermal management member, where the thermal management member is configured to heat and cool the battery assembly, the thermal management member includes a second heat exchange member, and the second heat exchange member is disposed between the battery assembly and a top wall and/or a bottom wall of the accommodating cavity; and a phase change material member, where the phase change material member extends along a circumferential direction of the battery assembly and is disposed on a peripheral side of the battery assembly to exchange heat with battery cells on the peripheral side of the battery assembly.

In the foregoing technical solution, since the phase change material member is disposed on the peripheral side of the battery assembly, the phase change material member can store or release heat when the thermal management member exchanges heat with the battery assembly, so as to reduce the temperature change rate of the battery cells on the peripheral side of the battery assembly and make the temperature change rates of various portions of the battery assembly tend to be consistent. When the thermal management member stops exchanging heat with the battery assembly, the phase change material member can provide thermal preservation for the battery cells on the peripheral side of the battery assembly, so that the heat dissipation rate of the battery cells on the peripheral side tends to be consistent with that of the remaining battery cells, thereby improving the temperature uniformity of the battery assembly and prolonging the service life of the battery.

According to an example of this application, the phase change material member is disposed between the battery assembly and a side wall of the accommodating cavity.

In the foregoing technical solution, the phase change material member being disposed between the battery assembly and the side wall of the accommodating cavity can facilitate the arrangement of the phase change material member and the contact between the phase change material member and the battery assembly for heat exchange. The phase change material member can also be disposed between the battery assembly and the side wall of the accommodating cavity as a buffer structure, reducing the probability of collision between the battery assembly and the side wall of the accommodating cavity, thereby improving the safety performance of the battery assembly.

According to an example of this application, the phase change material member includes a housing and a phase change material, the housing defines a cavity, and the phase change material fills the cavity.

In the foregoing technical solution, the phase change material member includes the housing and the phase change material filling the housing, and the housing can provide an accommodating space for the phase change material, thereby simplifying the structure of the phase change material and reducing the cost of the phase change material member.

According to an example of this application, the housing includes a metal layer and insulating film layers, and the insulating film layers are disposed on two surfaces of the metal layer in a thickness direction.

In the foregoing technical solution, since the housing includes the metal layer and the insulating film layers disposed on two sides of the metal layer in the thickness direction, the structural strength of the shell can be improved, reducing the probability of leakage of the phase change material, and improving the insulation performance of the phase change material member.

According to an example of this application, the housing includes a first half-shell and a second half-shell, the first half-shell and the second half-shell are arranged in a thickness direction of the phase change material member, and a peripheral edge of the first half-shell and a peripheral edge of the second half-shell are hermetically bonded in a thickness direction of the housing and fit together to define the cavity.

In the foregoing technical solution, the peripheral edges of the first half-shell and the second half-shell are connected and fit together to form the cavity, which can further simplify the structure of the housing and facilitate processing and manufacturing.

According to an example of this application, the phase change material member includes a phase change material, and the phase change material is configured to undergo a solid-liquid phase change within a preset operating temperature range of the battery assembly.

In the foregoing technical solution, setting the phase change material to undergo a solid-liquid phase change within the preset operating temperature range can reduce the volume change of the phase change material during state change, and reduce the pressure change inside the phase change material member, thereby reducing the probability of leakage of the phase change material. This can also enable the battery assembly to be maintained within the preset operating temperature range, reducing the probability of the battery assembly operating beyond the preset operating temperature range, thereby improving the safety and stability of the battery assembly.

According to an example of this application, the phase change material is paraffin or a supersaturated salt solution.

In the foregoing technical solution, setting the phase change material to be paraffin or a supersaturated salt solution can reduce the cost of the phase change material member.

According to an example of this application, the phase change material member further includes an adsorption member, and the adsorption member is configured to be suitable for adsorbing the liquid phase change material.

In the foregoing technical solution, the adsorption member being configured to adsorb the liquid phase change material can allow the liquid phase change material to be uniformly distributed in the phase change material member, thereby improving the temperature uniformity of the phase change material member at various positions.

According to an example of this application, the adsorption member is a porous material member.

In the foregoing technical solution, the adsorption member being a porous material member can improve the adsorption performance of the adsorption member for the liquid phase change material, thereby improving the temperature uniformity of the phase change material member at various positions.

According to an example of this application, the box includes a beam body, the beam body encloses the accommodating cavity, the beam body has mold cavities inside, and the phase change material member is disposed in at least some of the mold cavities.

In the foregoing technical solution, with the phase change material member disposed in the mold cavities of the beam body, the phase change material member can exchange heat with the battery cells on the peripheral side of the battery assembly through the beam body, thereby improving the temperature uniformity of the battery. In addition, the phase change material member does not need to occupy the internal space of the box, thereby enabling a compact structure and increasing the energy density of the battery.

According to an example of this application, the phase change material member is provided in plurality, and the plurality of phase change material members are spaced apart in the circumferential direction of the battery assembly.

In the foregoing technical solution, with the plurality of phase change material members spaced apart in the circumferential direction of the battery assembly, the phase change material members can exchange heat with more battery cells on the peripheral side of the battery assembly, thereby further improving the temperature uniformity of the battery.

According to an example of this application, the battery assembly includes a plurality of cell groups, the plurality of cell groups are arranged sequentially in a first direction, and each cell group includes a plurality of battery cells arranged sequentially in a second direction, where the phase change material member is disposed on two opposite sides of the battery assembly in the first direction, and/or the phase change material member is disposed on two opposite sides of the battery assembly in the second direction, the first direction being perpendicular to the second direction.

In the foregoing technical solution, with the phase change material member disposed on two opposite sides of the battery assembly in the first direction and/or the second direction, the phase change material member can exchange heat with more battery cells on the peripheral side of the battery assembly, thereby further improving the temperature uniformity of the battery.

According to an example of this application, the thermal management member includes a first heat exchange member, the first heat exchange member extends along the second direction, the first heat exchange member is disposed between two adjacent cell groups and on both sides of the battery assembly in the first direction, and the phase change material member is disposed between a side wall of the accommodating cavity and the first heat exchange member.

In the foregoing technical solution, since the plurality of first heat exchange members are disposed between adjacent cell groups and the phase change material member is disposed between the side wall of the accommodating cavity and the first heat exchange member, when the first heat exchange member heats the battery assembly, the phase change material member can absorb heat from the first heat exchange member, reducing the temperature rise rate of the cell groups on the peripheral side of the battery assembly. When the first heat exchange member stops heating, the phase change material member can release heat, reducing the heat dissipation rate of the cell groups on the peripheral side of the battery assembly, thereby reducing the temperature difference between the cell groups on the peripheral side of the battery assembly and the remaining cell groups, and improving the temperature uniformity of the battery assembly.

According to an example of this application, the phase change material member is disposed on two opposite sides of the battery assembly in a first direction.

In the foregoing technical solution, since the phase change material member is disposed on two sides of the battery assembly, the phase change material member can directly exchange heat with the second heat exchange member or indirectly exchange heat with the second heat exchange member through the box, and absorb heat from the second heat exchange member, so as to reduce the temperature rise rate and heat dissipation rate of the battery cells on the peripheral side of the battery assembly, thereby improving the temperature uniformity of the battery assembly.

According to an example of this application, the second heat exchange member includes a heat exchange tube, the heat exchange tube extends in a reciprocating manner along the first direction, and both ends of the heat exchange tube in the first direction extend beyond a side of the phase change material member facing away from the battery assembly.

In the foregoing technical solution, since the second heat exchange member includes the heat exchange tube extending in a reciprocating manner and both ends of the heat exchange tube exceed the phase change material member, during heating, the heat exchange tube can simultaneously heat the phase change material member and the battery cells. After heating is stopped, the phase change material member can provide thermal preservation for the cell groups on the peripheral side of the battery assembly, thereby improving the temperature uniformity of the battery assembly.

According to a second aspect, the embodiments of this application provide an electric device including the battery according to the first aspect of this application.

In the foregoing embodiments, with the battery according to the first aspect provided and the peripheral side of the battery assembly provided with the phase change material member, the phase change material member can store or release heat when the thermal management member exchanges heat with the battery assembly, so as to reduce the temperature change rate of the battery cells on the peripheral side of the battery assembly and make the temperature change rates of various portions of the battery assembly tend to be consistent. When the thermal management member stops exchanging heat with the battery assembly, the phase change material member can provide thermal preservation for the battery cells on the peripheral side of the battery assembly, so that the heat dissipation rate of the battery cells on the peripheral side tends to be consistent with that of the remaining battery cells, thereby improving the temperature uniformity of the battery assembly, prolonging the service life of the battery, and improving the overall performance of the electric device.

For additional aspects and advantages of this application, some will be given in the following description, and some will become apparent in the following description or will be understood in the practice of this application.

### BRIEF DESCRIPTION OF DRAWINGS

FIG. 1 is a schematic diagram of a vehicle according to an embodiment of this application;
FIG. 2 is an exploded view of a battery according to an embodiment of this application;
FIG. 3 is an exploded view of a battery without an upper cover according to an embodiment of this application;
FIG. 4 is a partially enlarged view of the circled portion A in FIG. 3;
FIG. 5 is a schematic diagram of a partition beam, a battery assembly, a phase change material member, and a plurality of first heat exchange members of a battery according to an embodiment of this application;
FIG. 6 is a top view of the partition beam, the battery assembly, the phase change material member, and the first heat exchange members shown in FIG. 5;
FIG. 7 is a cross-sectional view along line B-B in FIG. 6;
FIG. 8 is an enlarged view of the circled portion C in FIG. 7; and
FIG. 9 is a schematic diagram of a partition beam, a battery assembly, a phase change material member, a plurality of first heat exchange members, and a second heat exchange member of a battery according to an embodiment of this application.

### Reference signs:

1. electric device;
100. battery; 200. controller; 300. motor;
10. box; 101. accommodating cavity;
11. first portion; 111. beam body; 1101. mold cavity; 1111. frame beam; 1112. partition beam; 112. bottom plate;
12. second portion;
20. battery assembly; 21. cell group; 211. battery cell; 21a. first cell group;
30. thermal management member; 31. first heat exchange member;
32. second heat exchange member; 321. heat exchange tube; 3211. straight tube section; 3212. bent section;
40. phase change material member;
41. housing; 401. cavity; 411. first half-shell; 412. second half-shell;
42. phase change material;
50. bottom guard plate;
Y. first direction; X. second direction; and Z. third direction.

### DESCRIPTION OF EMBODIMENTS

The following describes in detail embodiments of technical solutions of this application with reference to the accompanying drawings. The following embodiments are merely used to describe the technical solutions of this application more clearly, and therefore are merely used as examples and do not constitute any limitation on the protection scope of this application.

Unless otherwise defined, all technical and scientific terms used herein shall have the same meanings as commonly understood by persons skilled in the art to which this application belongs. The terms used herein are merely intended to describe the specific embodiments rather than to limit this application. The terms "include", "have", and any other variations thereof in the specification, claims, and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means more than two, unless otherwise specifically defined.

Reference to "embodiment" in this specification means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this application, the term "a plurality of" means more than two (inclusive).

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "axial", "radial", "circumferential", and the like are based on the orientations or positional relationships shown in the accompanying drawings. These terms are merely for ease and brevity of description of the embodiments of this application rather than indicating or implying that the means or elements mentioned must have specific orientations or must be constructed or manipulated according to specific orientations, and therefore shall not be construed as any limitations on the embodiments of this application.

In the description of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, from a perspective of the market development, traction batteries have been increasingly widely used. Traction batteries have been widely used in energy storage power supply systems such as hydroelectric, thermal, wind, and solar power plants, and many other fields including electric transportation tools such as electric bicycles, electric motorcycles, and electric vehicles, military equipment, and aerospace. With the continuous expansion of application fields of traction batteries, market demands for traction batteries are also increasing.

The temperature environment inside the battery is affected by external weather conditions, and the battery cells inside the battery need to be within a certain temperature range during operation. When the temperature inside the battery exceeds or falls below this range, the stability and performance of the battery are significantly affected. For example, in hot weather, the battery cells inside the battery need to be cooled to maintain the temperature inside the battery within the required temperature range. In cold weather, the battery cells inside the battery need to be heated to maintain the temperature inside the battery within the required temperature range.

For a battery in the related art, to enable battery cells to operate within an appropriate temperature range, a heat exchange member and a phase change material member are disposed in a box of the battery. The heat exchange member is disposed at the bottom of the battery cells. The phase change material member is bent multiple times, and then disposed on side surfaces of the battery cells and interspersed between the plurality of battery cells. Since side walls and bottom surfaces of all the battery cells are heat exchange surfaces for exchanging heat with the phase change material member and the heat exchange member respectively, the heat exchange amount of each battery cell is approximately the same. However, for the battery cells on the peripheral side of the battery assembly, heat exchange with the environment causes a large temperature difference between the battery cells on the peripheral side and the battery cells located in the middle of the battery assembly, resulting in poor temperature uniformity of the battery assembly.

To reduce the heat loss of the battery cells on the peripheral side, in the related art, thermal insulation pads are disposed on two ends of the battery assembly. The thermal insulation pads abut against the box. Since the battery cells are separated from the beams of the box only by the thermal insulation pads, the distance between the battery cells and the beams of the box is too short, and the thermal insulation pads provide passive thermal insulation with poor effect. As a result, heat is still dissipated too quickly from the battery cells on the peripheral side, resulting in a large temperature difference from the battery cells in the central region and non-uniform temperature distribution of the battery assembly.

Based on the foregoing considerations, to resolve the problem that the battery cells on an end portion of the battery assembly are close to the beams of the box, resulting in excessive heat dissipation and an excessively large overall temperature difference of the battery assembly, and to improve the temperature uniformity of the battery assembly, this application proposes a battery. A phase change material member is disposed on a peripheral side of a battery assembly. The phase change material member can store or release heat when a thermal management member exchanges heat with the battery assembly, so as to reduce the temperature change rate of the battery cells on the peripheral side of the battery assembly and make the temperature change rates of various portions of the battery assembly tend to be consistent. When the thermal management member stops exchanging heat with the battery assembly, the phase change material member can provide thermal preservation for the battery cells on the peripheral side of the battery assembly, so that the heat dissipation rate of the battery cells on the peripheral side tends to be consistent with that of the remaining battery cells, thereby improving the temperature uniformity of the battery assembly and prolonging the service life of the battery.

An embodiment of this application provides an electric device that uses the battery cell of this disclosure as a power source. The electric device may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device 1 being a vehicle is used as an example in the following embodiments for detailed description of the structures of the electric device 1 and the battery 100 of this application.

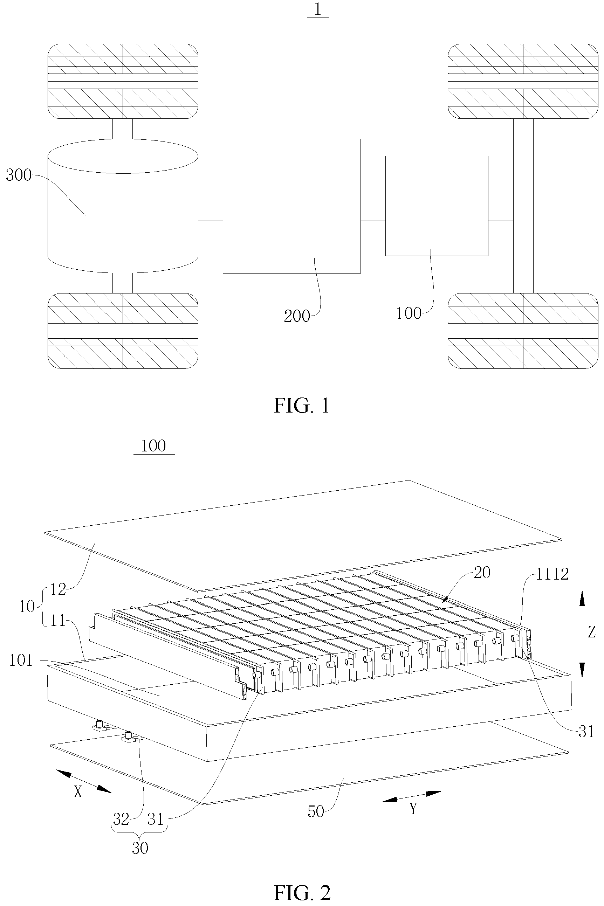

Referring to FIG. 1, FIG. 1 is a schematic structural diagram of an electric device 1 being a vehicle according to some embodiments of this application. The vehicle may be a fossil fuel vehicle, a natural gas vehicle, or a new energy vehicle. The new energy vehicle may be a battery electric vehicle, a hybrid electric vehicle, a range-extended electric vehicle, or the like. The vehicle is provided with a battery 100, where the battery 100 may be disposed at the bottom, front, or rear of the vehicle. The battery 100 may be configured to supply power to the vehicle. For example, the battery 100 may be used as an operational power source for the vehicle. The vehicle may further include a controller 200 and a motor 300, where the controller 200 is configured to control the battery 100 to supply power to the motor 300, for example, to satisfy power needs of start, navigation, and driving of the vehicle. In some embodiments of this application, the battery 100 can be used as not only the operational power source for the vehicle but also a driving power source for the vehicle, replacing or partially replacing fossil fuel or natural gas to provide driving traction for the vehicle.

Referring to FIG. 2, FIG. 2 is a structural exploded view of a battery 100 according to some embodiments of this application. The battery 100 includes a box 10 and a plurality of battery cells 211, where the battery cells 211 are accommodated in the box 10. The box 10 is configured to provide an assembly space for the battery cells 211. The box 10 may be a variety of structures. In some embodiments, the box 10 may include a first box body 10 and a second box body 10. The first box body 10 and the second box body 10 fit together to jointly define an assembly space for accommodating the battery cells 211. The second box body 10 may be a hollow structure with an opening at one end, the first box body 10 may be a plate-shaped structure, and the first box body 10 covers the opening side of the second box body 10 so that the first box body 10 and the second box body 10 jointly define the assembly space. Alternatively, both the first box body 10 and the second box body 10 may be hollow structures with an opening at one side (as shown in FIG. 2), and the opening side of the first box body 10 is engaged with the opening side of the second box body 10. Certainly, the box 10 formed by the first box body 10 and the second box body 10 may be of various shapes, for example, cylinder or cuboid.

In the battery 100, the plurality of battery cells 211 may be connected in series, parallel, or series-parallel, where being connected in series-parallel means a combination of series and parallel connections of the plurality of battery cells 211. The plurality of battery cells 211 may be directly connected in series, parallel, or series-parallel, and then an entirety of the plurality of battery cells 211 is accommodated in the box 10. Alternatively, the battery 100 may be formed by a plurality of battery cells 211 being connected in series, parallel, or series-parallel first to form a battery 100 module and then a plurality of battery 100 modules being connected in series, parallel, or series-parallel to form an entirety which is accommodated in the box 10. The battery 100 may further include other structures. For example, the battery 100 may further include a busbar configured to implement electrical connection between the plurality of battery cells 211.

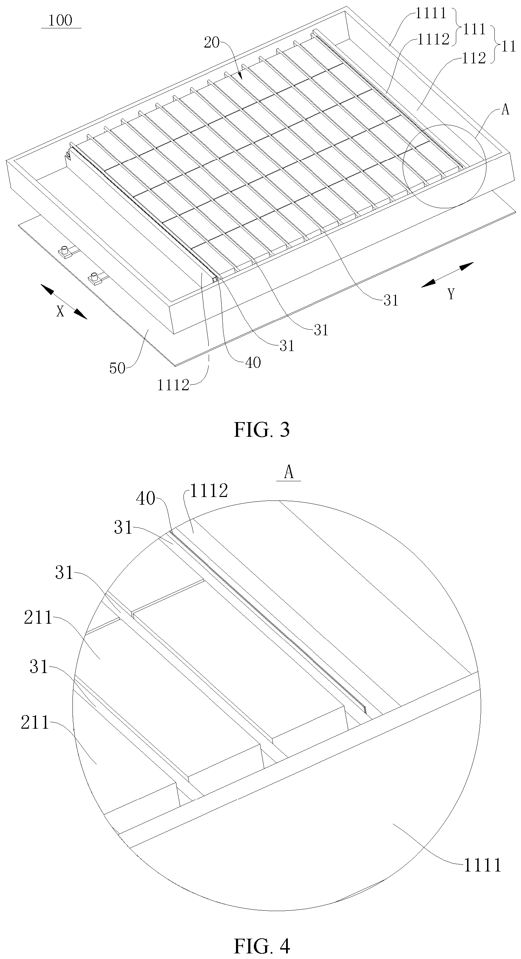

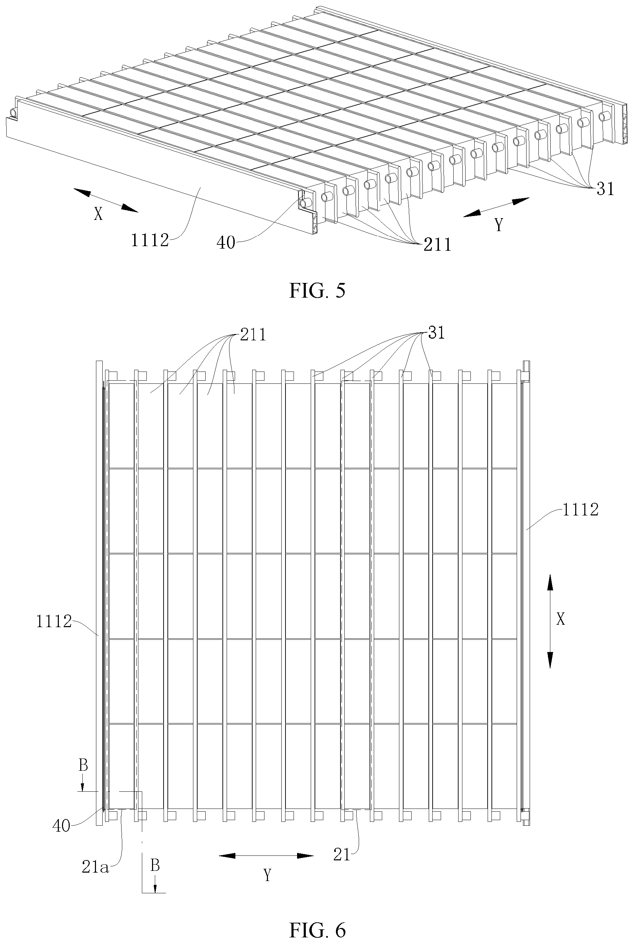

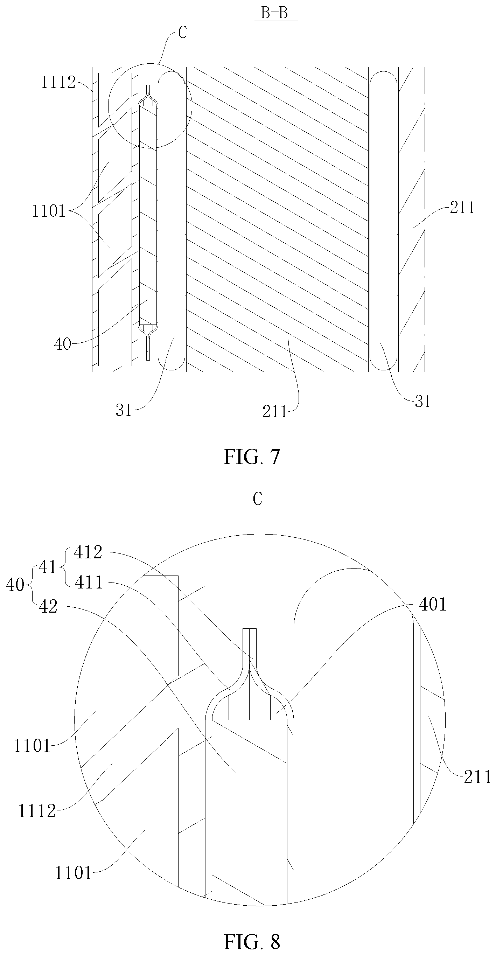

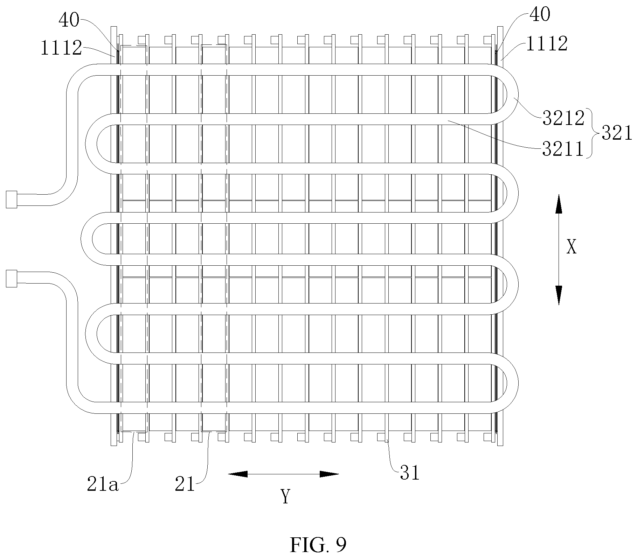

The following describes a battery 100 according to embodiments of a first aspect of this application with reference to FIGs. 3 to 9. FIG. 3 is an exploded view of the battery 100 without an upper cover according to an embodiment of this application; FIG. 4 is a partially enlarged view of the circled portion A in FIG. 3; FIG. 5 is a schematic diagram of a partition beam 1112, a battery assembly 20, a phase change material member 40, and a plurality of first heat exchange members 31 of the battery 100 according to an embodiment of this application; FIG. 6 is a top view of the partition beam 1112, the battery assembly 20, the phase change material member 40, and the first heat exchange members 31 shown in FIG. 5; FIG. 7 is a cross-sectional view along line B-B in FIG. 6; FIG. 8 is an enlarged view of the circled portion C in FIG. 7; and FIG. 9 is a schematic diagram of a partition beam 1112, a battery assembly 20, a phase change material member 40, a plurality of first heat exchange members 31, and a second heat exchange member 32 of the battery 100 according to an embodiment of this application.

For ease of description, the following sets a length direction of the battery 100 as a first direction Y, a width direction of the battery 100 as a second direction X, and a thickness direction of the battery 100 as a third direction Z. In a specific example, the length direction of the battery 100, that is, the first direction Y, is the left-right direction, the width direction of the battery 100, that is, the second direction X, is the front-rear direction, and the thickness direction of the battery 100, that is, the third direction Z, is the up-down direction.

The embodiments of this application provide a battery 100. As shown in FIGs. 2 to 6, the battery 100 includes a box 10, a battery assembly 20, a thermal management member 30, and a phase change material member 40. The box 10 has an accommodating cavity 101. The battery assembly 20 is disposed in the accommodating cavity 101. The thermal management member 30 is configured to heat and cool the battery assembly 20. The thermal management member 30 may include a second heat exchange member 32. The second heat exchange member 32 is disposed between the battery assembly 20 and a top wall and/or a bottom wall of the accommodating cavity 101. The phase change material member 40 extends along a circumferential direction of the battery assembly 20 and is disposed on a peripheral side of the battery assembly 20 to exchange heat with battery cells 211 on the peripheral side of the battery assembly 20.

As shown in FIG. 2, the box 10 includes a first portion 11 and a second portion 12. The first portion 11 defines the accommodating cavity 101 that is open on the upper side. The second portion 12 is in a shape of a plate and covers the upper side of the first portion 11. The first portion 11 may be connected to the second portion 12 by snap-fitting or fasteners.

The battery 100 further includes a bottom guard plate 50. The bottom guard plate 50 is disposed on the lower side of the first portion 11 to protect the box 10, reduce and buffer the impact force from an object located below the battery 100 acting on the box 10, improve the structural strength of the box 10, and protect the box 10 and the thermal management member 30 disposed at the bottom of the first portion 11.

As shown in FIG. 3, the battery assembly 20 may include a plurality of battery cells 211, and the plurality of battery cells 211 are arranged sequentially in the first direction Y and/or the second direction X.

The thermal management member 30 is an active thermal management member 30, which can be used to heat the battery assembly 20 or to cool the battery assembly 20, so that the battery assembly 20 operates within an appropriate temperature range, improving the performance of the battery 100. The thermal management member 30 may be a heat exchange plate or a heat exchange tube 321 having a heat exchange flow channel. The thermal management member 30 may alternatively be a heating pad having a heating function, or the like. The thermal management member 30 may be disposed at the bottom or top of the battery assembly 20 and/or between the battery cells 211.

The second heat exchange member 32 may be a heat exchange plate. Specifically, the second heat exchange member 32 is formed in a shape of a horizontally arranged rectangular plate. A surface of the second heat exchange member 32 in the thickness direction is bonded to the battery assembly 20 to exchange heat with the battery assembly 20. A second heat exchange flow channel may be formed inside the second heat exchange member 32, and the second heat exchange flow channel may extend linearly or in a meandering manner. The second heat exchange member 32 may also include a heat exchange tube 321, and the second heat exchange flow channel is defined inside the heat exchange tube 321, where the heat exchange tube 321 may be a flat tube.

The second heat exchange member 32 may be disposed between the bottom wall of the accommodating cavity 101 and a bottom surface of the battery assembly 20, between the bottom wall of the accommodating cavity 101 and a top surface of the battery assembly 20, or both between the top wall of the accommodating cavity 101 and the top surface of the battery assembly 20 and between the bottom wall of the accommodating cavity 101 and the bottom surface of the battery assembly 20. In addition, the second heat exchange member 32 may be disposed inside the box 10 or outside the box 10. For example, the first portion 11 of the box 10 may be an integrally formed sheet metal member, and the second heat exchange member 32 may be disposed outside the box 10 and bonded to the bottom wall of the box 10. The second heat exchange member 32 exchanges heat with the battery assembly 20 through the bottom wall of the box 10.

The phase change material member 40 includes a phase change material 42. The phase change material 42 undergoes a state change at a phase change temperature to absorb or release latent heat. Specifically, the phase change material 42 may undergo a solid-liquid phase change or a gas-liquid phase change. The phase change material member 40 being disposed on the peripheral side of the battery assembly 20 means that in a horizontal projection plane, the phase change material member 40 is located outside a projection of the battery assembly 20 and is not located within the projection of the battery assembly 20. The phase change material member 40 may exchange heat with side walls of the battery cells 211 disposed on the peripheral side of the battery assembly 20, that is, the phase change material member 40 exchanges heat with the peripheral side wall of the battery assembly 20.

When the thermal management member 30 is used to actively manage the temperature of the battery assembly 20, the thermal management member 30 directly exchanges heat with the plurality of battery cells 211 of the battery assembly 20. The following description uses an example in which the thermal management member 30 is disposed at the bottom of the battery assembly 20 and used to heat the battery assembly 20 under a low-temperature condition. After reading the following technical solutions, persons skilled in the art can obviously understand the solution in which the thermal management member 30 is disposed on the bottom wall of the battery assembly 20 and used to cool the battery assembly 20.

When the thermal management member 30 heats the battery assembly 20, since the phase change material member 40 is disposed on the peripheral side of the battery assembly 20, the thermal management member 30 can directly heat the phase change material member 40, or indirectly heat the phase change material member 40 through heat conduction via the box 10, so that the phase change material member 40 can absorb and store a large amount of heat. Since the phase change material member 40 is disposed on the peripheral side of the battery assembly 20, the phase change material member 40 can provide thermal preservation on the peripheral side of the battery assembly 20, so as to reduce the heat dissipated from the peripheral side of the battery assembly 20 to the environment, and make the temperature of the battery cells 211 on the peripheral side of the battery assembly 20 more consistent with that of the battery cells 211 in other portions.

In addition, when the thermal management member 30 starts to heat the battery assembly 20, the thermal management member 30 heats beams due to contact with the beams of the box 10. Since the beam of the box 10 is generally a metal member with good heat conduction but low heat capacity, the beams of the box 10 heat up quickly and reach thermal equilibrium at the beginning of heating. In this case, since the peripheral side of the battery assembly 20 is provided with the phase change material member 40, the phase change material member 40 can absorb a large amount of heat from the beams of the box 10, reduce heat transferred from the beams of the box 10 to the battery cells 211 on the peripheral side of the battery assembly 20, reduce the temperature rise rate of the battery cells 211 on the peripheral side of the battery assembly 20, and make the temperature rise rate of the battery cells 211 on the peripheral side of the battery assembly 20 tend to be consistent with that of the battery cells 211 in other portions, improving the temperature uniformity of the battery 100.

The following describes the battery 100 according to the embodiments of this application by using an example in which the thermal management member 30 is disposed between adjacent battery cells 211 and on the peripheral side of the battery assembly 20 and used to heat the battery assembly 20 under a low-temperature condition.

When the thermal management member 30 heats the battery assembly 20, for the battery cells 211 on the peripheral side of the battery assembly 20, since the thermal management member 30 is disposed on the peripheral side of the battery assembly 20, compared with the thermal management member 30 being disposed between adjacent battery cells 211, the thermal management member 30 on the peripheral side only heats the battery cells 211 on the peripheral side without simultaneously heating the battery cells 211 on two sides. Therefore, when the phase change material member 40 is not disposed on the peripheral side of the battery assembly 20, the temperature rise rate of the battery cells 211 on the peripheral side of the battery assembly 20 is faster, affecting the temperature uniformity of the battery assembly 20.

Since the phase change material member 40 is disposed on the peripheral side of the battery assembly 20 in the embodiments, the phase change material member 40 can absorb heat from the thermal management member 30 located on the peripheral side of the battery assembly 20, which can reduce the temperature rise rate of the battery cells 211 on the peripheral side of the battery assembly 20 and make the temperature rise rate of the battery cells 211 on the peripheral side tend to be consistent with that of the remaining battery cells 211.

When the thermal management member 30 stops heating, since the phase change material member 40 stores heat, it can continuously release heat to the battery cells 211 on the peripheral side and provide active thermal preservation for the battery cells 211 on the peripheral side. In this way, the heat dissipation rate of the battery cells 211 on the peripheral side can be reduced, and the temperature of the battery cells 211 on the peripheral side can tend to be consistent with that of the remaining battery cells 211, improving the temperature uniformity of the battery assembly 20.

In the foregoing technical solution, since the phase change material member 40 is disposed on the peripheral side of the battery assembly 20, the phase change material member 40 can store or release heat when the thermal management member 30 exchanges heat with the battery assembly 20, so as to reduce the temperature change rate of the battery cells 211 on the peripheral side of the battery assembly 20 and make the temperature change rates of various portions of the battery assembly 20 tend to be consistent. When the thermal management member 30 stops exchanging heat with the battery assembly 20, the phase change material member 40 can provide thermal preservation for the battery cells 211 on the peripheral side of the battery assembly 20, so that the heat dissipation rate of the battery cells 211 on the peripheral side tends to be consistent with that of the remaining battery cells 211, thereby improving the temperature uniformity of the battery assembly 20 and prolonging the service life of the battery 100.

In some embodiments of this application, as shown in FIGs. 3 and 4, the phase change material member 40 is disposed between the battery assembly 20 and a side wall of the accommodating cavity 101.

For example, the phase change material member 40 is disposed vertically and is in a shape of a plate extending along the circumferential direction of the battery assembly 20, and the phase change material member 40 is disposed between the peripheral side surface of the battery assembly 20 and the side wall surface of the accommodating cavity 101. A surface of the phase change material member 40 facing toward the battery assembly 20 may be directly bonded to the surface of the battery cells 211 of the battery assembly 20, or the surface of the phase change material member 40 facing toward the battery assembly 20 may be indirectly connected to the surface of the battery assembly 20 through the thermal management member 30.

The phase change material member 40 may extend along the circumferential direction of the battery assembly 20 to form a ring shape, or a plurality of phase change material members 40 may be arranged sequentially in the circumferential direction of the battery assembly 20, so as to further improve the temperature uniformity of the battery assembly 20.

In the foregoing technical solution, the phase change material member 40 being disposed between the battery assembly 20 and the side wall of the accommodating cavity 101 can facilitate the arrangement of the phase change material member 40 and the contact between the phase change material member 40 and the battery assembly 20 for heat exchange. The phase change material member 40 can also be disposed between the battery assembly 20 and the side wall of the accommodating cavity 101 as a buffer structure, reducing the probability of collision between the battery assembly 20 and the side wall of the accommodating cavity 101, thereby improving the safety performance of the battery assembly 20.

In some embodiments of this application, as shown in FIGs. 7 and 8, the phase change material member 40 may include a housing 41 and a phase change material 42, the housing 41 defines a cavity 401, and the phase change material 42 fills the cavity 401.

The housing 41 can provide an accommodating space for the phase change material 42, reducing the probability of leakage of the phase change material 42. Since the phase change material member 40 is disposed in the box 10, to improve the insulation performance of the phase change material member 40, the housing 41 may be set as an insulating material member.

In the foregoing technical solution, the phase change material member 40 includes the housing 41 and the phase change material 42 filling the housing 41, and the housing 41 can provide the accommodating space for the phase change material 42, thereby simplifying the structure of the phase change material 42 and reducing the cost of the phase change material member 40.

In some embodiments of this application, the housing 41 includes a metal layer and insulating film layers, and the insulating film layers are disposed on two surfaces of the metal layer in a thickness direction.

For example, the housing 41 may include one metal layer and two insulating film layers. The two insulating film layers completely cover two surfaces of the metal layer in the thickness direction respectively. The metal layer can improve the structural strength of the housing 41, and reduce the probability of cracking of the housing 41 when the phase change material 42 undergoes a state change, thereby reducing the probability of leakage of the phase change material. The insulating film layer can insulate the phase change material member 40 from the box 10, the battery assembly 20, and the like, thereby reducing the probability of short circuit between the phase change material member 40 and the battery assembly 20.

In a specific example, the housing 41 may be an aluminum-plastic film housing 41.

In the foregoing technical solution, since the housing 41 includes the metal layer and the insulating film layers disposed on two sides of the metal layer in the thickness direction, the structural strength of the shell can be improved, reducing the probability of leakage of the phase change material 42, and improving the insulation performance of the phase change material member 40.

In some embodiments of this application, as shown in FIG. 8, the housing 41 may include a first half-shell 411 and a second half-shell 412. The first half-shell 411 and the second half-shell 412 are arranged in a thickness direction of the phase change material member 40. A peripheral edge of the first half-shell 411 and a peripheral edge of the second half-shell 412 are hermetically bonded in a thickness direction of the housing 41 and fit together to define the cavity 401.

For example, the first half-shell 411 is formed with a first concave cavity recessed away from the second half-shell 412, the second half-shell 412 is formed with a second concave cavity recessed away from the first half-shell 411, and the first half-shell 411 and the second half-shell 412 are connected through the peripheral edge of the first concave cavity and the peripheral edge of the second concave cavity.

In the foregoing technical solution, the peripheral edges of the first half-shell 411 and the second half-shell 412 are connected and fit together to form the cavity 401, which can further simplify the structure of the housing 41 and facilitate processing and manufacturing.

In some embodiments of this application, the phase change material member 40 may include a phase change material 42, and the phase change material 42 is configured to undergo a solid-liquid phase change within a preset operating temperature range of the battery assembly 20.

The phase change material 42 in the embodiments may have high latent heat capacity, and the latent heat capacity of the phase change material 42 is higher than the heat capacity of the battery cell 211. In this way, when undergoing a phase change, the phase change material 42 can absorb or release a large amount of latent heat, and stabilize the temperature change rate of the battery cells 211 on the peripheral side of the battery assembly 20, improving the temperature uniformity of the battery 100.

In a specific example, within the preset operating temperature range of the battery assembly 20, the phase change material 42 is between a solid state and a liquid state. For example, the phase change temperature of the phase change material 42 may be between 0°C and 20°C. In this way, the phase change material 42 can undergo a phase change within the preset operating temperature range of the battery assembly 20, and absorb or release a large amount of latent heat, so that the battery assembly 20 can be maintained within the preset operating range, reducing the probability of the battery assembly 20 operating beyond the preset operating temperature range, thereby improving the safety and stability of the battery assembly 20.

In a specific example, the preset operating temperature range of the battery assembly 20 has an upper temperature limit value and a lower temperature limit value. The phase change temperature of the phase change material 42 is the upper temperature limit value ±5°C, and/or the phase change temperature of the phase change material 42 is the lower temperature limit value ±5°C. The phase change temperature of the phase change material 42 may not be a definite temperature value, but may be a temperature range.

The solid-liquid phase change of the phase change material 42 in the embodiments can reduce the volume change of the phase change material 42 during state change, and reduce the pressure change inside the phase change material member 40, thereby reducing the probability of leakage of the phase change material 42.

In the foregoing technical solution, setting the phase change material 42 to undergo a solid-liquid phase change within the preset operating temperature range can reduce the volume change of the phase change material 42 during state change, and reduce the pressure change inside the phase change material member 40, thereby reducing the probability of leakage of the phase change material 42. This can also enable the battery assembly 20 to be maintained within the preset operating temperature range, reducing the probability of the battery assembly 20 operating beyond the preset operating temperature range, thereby improving the safety and stability of the battery assembly 20.

In some embodiments of this application, the phase change material 42 is paraffin or a supersaturated salt solution.

For example, the phase change material 42 may be paraffin. Paraffin has large phase change latent heat, small volume change during solid-liquid phase change, good thermal stability, no supercooling phenomenon, and a relatively low price, which can reduce the cost of the phase change material member 40 while satisfying the requirement of absorbing or releasing heat through phase change. For another example, the phase change material 42 may be a supersaturated sodium sulfate solution or a supersaturated sodium acetate solution.

In the foregoing technical solution, setting the phase change material 42 to be paraffin or a supersaturated salt solution can reduce the cost of the phase change material member 40.

In some embodiments of this application, the phase change material member 40 may further include an adsorption member, the adsorption member is configured to be suitable for adsorbing the liquid phase change material 42.

For example, the adsorption member may fill the shell of the phase change material member 40. When the phase change material 42 melts, the adsorption member can adsorb the liquid phase change material 42. In this way, the liquid phase change material 42 can be uniformly distributed in the shell instead of gathering at the bottom of the shell under the action of gravity, thereby improving the temperature uniformity of the phase change material member 40 in the up-down direction.

In the foregoing technical solution, the adsorption member being configured to adsorb the liquid phase change material 42 can allow the liquid phase change material 42 to be uniformly distributed in the phase change material member 40, thereby improving the temperature uniformity of the phase change material member 40 at various positions.

In some embodiments of this application, the adsorption member is a porous material member.

The porous material member is a material member having interconnected or closed pores. The porous material member has good adsorption performance and can effectively adsorb the liquid phase change material 42.

For example, the adsorption member may be a sponge member, a cotton fabric member, or the like; and the adsorption member may alternatively be a graphite material member.

In the foregoing technical solution, the adsorption member being a porous material member can improve the adsorption performance of the adsorption member for the liquid phase change material 42, thereby improving the temperature uniformity of the phase change material member 40 at various positions.

In some embodiments of this application, the box 10 includes a beam body 111. The beam body 111 encloses the accommodating cavity 101. The beam body 111 has mold cavities 1101 inside. The phase change material member 40 is disposed in at least some of the mold cavities 1101.

The plurality of mold cavities 1101 of the beam body 111 may all be provided with the phase change material member 40, or only some of the mold cavities 1101 may be provided with the phase change material member 40. Disposing the phase change material member 40 in the mold cavities 1101 inside the beam body can reduce the space occupied by the phase change material 42 in the box 10, increasing the energy density of the battery 100.

In a specific example, the box 10 includes a first portion 11 and a second portion 12. The first portion 11 forms the accommodating cavity 101 with an open top. The second portion 12 covers the upper side of the first portion 11. The first portion 11 includes the beam body 111 and a bottom plate 112. The bottom plate 112 is connected to the bottom of the beam body 111. The beam body 111 includes a frame beam 1111 and a partition beam 1112. The frame beam 1111 is a rectangular ring. The bottom plate 112 covers the bottom of the frame beam 1111. The partition beam 1112 is disposed on the inner side of the frame beam 1111. The partition beam 1112 can extend along a width direction of the frame beam 1111, with two ends extending to two opposite sides of the frame beam 1111 respectively, and is fixed to the frame beam 1111. The partition beam 1112 may be provided in one or plurality. When there are a plurality of partition beams 1112, the plurality of partition beams 1112 are spaced apart in a length direction of the frame beam 1111. Specifically, the beam body 111 includes a frame beam 1111 and two partition beams 1112. The battery assembly 20 is disposed between the two partition beams 1112.

The partition beam 1112 and the frame beam 1111 both have mold cavities 1101. At least some of the mold cavities 1101 of the partition beam 1112 and/or the frame beam 1111 are provided with the phase change material member 40. For example, the plurality of mold cavities 1101 of the two partition beams 1112 are all filled with the phase change material member 40.

In the foregoing technical solution, with the phase change material member 40 disposed in the mold cavities 1101 of the beam body 111, the phase change material member 40 can exchange heat with the battery cells 211 on the peripheral side of the battery assembly 20 through the beam body 111, thereby improving the temperature uniformity of the battery 100. In addition, the phase change material member 40 does not need to occupy the internal space of the box 10, thereby enabling a compact structure and increasing the energy density of the battery 100.

In some embodiments of this application, the phase change material member 40 is provided in plurality, and the plurality of phase change material members 40 are spaced apart in the circumferential direction of the battery assembly 20.

For example, the number of phase change material members 40 may be two, three, four, five, eight, ten, or more.

In the foregoing technical solution, with the plurality of phase change material members 40 spaced apart in the circumferential direction of the battery assembly 20, the phase change material members 40 can exchange heat with more battery cells 211 on the peripheral side of the battery assembly 20, thereby further improving the temperature uniformity of the battery 100.

In some embodiments of this application, the battery assembly 20 includes a plurality of cell groups 21. The plurality of cell groups 21 are arranged sequentially in a first direction Y. Each cell group 21 includes a plurality of battery cells 211 arranged sequentially in a second direction X. The phase change material member 40 is disposed on two opposite sides of the battery assembly 20 in the first direction Y, and/or the phase change material member 40 is disposed on two opposite sides of the battery assembly 20 in the second direction X. The first direction Y is perpendicular to the second direction X.

That is, the phase change material member 40 may be disposed only on two sides of the battery assembly 20 in the first direction Y, only on two sides of the battery assembly 20 in the second direction X, or on two sides in the first direction Y and two sides in the second direction X of the battery assembly 20.

For example, the battery assembly 20 is disposed in the frame beam 1111 and located between the two partition beams 1112. Four phase change material members 40 may be disposed in the box 10. Specifically, two of the phase change material members 40 are disposed on two opposite sides of the battery assembly 20 in the first direction Y respectively and located between the partition beam 1112 and the battery assembly 20. The other two phase change material members 40 are disposed on two sides of the battery assembly 20 in the second direction X respectively and located between the frame beam 1111 and the battery assembly 20. For another example, only two phase change material members 40 may be disposed, and the two phase change material members 40 are disposed between the two partition beams 1112 and the battery assembly 20 respectively.

When the phase change material member 40 is disposed on one side surface of the battery assembly 20, the phase change material member 40 may extend from one end of the side surface of the battery assembly 20 to the other end. For example, when the phase change material member 40 is disposed on one side surface of the battery assembly 20 in the first direction Y, the phase change material member 40 extends along the second direction X and extends from one end of the battery assembly 20 in the second direction X to the other end. Further, two ends of the phase change material member 40 may be substantially flush with two ends of the battery assembly 20 in the second direction X. In some other examples, a plurality of phase change material members 40 may be disposed between one side surface of the battery assembly 20 and the side wall of the accommodating cavity 101. The plurality of phase change material members 40 may be arranged sequentially in the length direction of one side surface of the battery assembly 20, or may be arranged sequentially in the height direction of the battery assembly 20.

In the foregoing technical solution, with the phase change material member 40 disposed on two opposite sides of the battery assembly 20 in the first direction Y and/or the second direction X, the phase change material member 40 can exchange heat with more battery cells 211 on the peripheral side of the battery assembly 20, thereby further improving the temperature uniformity of the battery 100.

In some embodiments of this application, as shown in FIGs. 5 to 8, the thermal management member 30 includes a first heat exchange member 31. The first heat exchange member 31 extends along the second direction X. The first heat exchange member 31 is disposed between two adjacent cell groups 21 and on both sides of the battery assembly 20 in the first direction Y. The phase change material member 40 is disposed between a side wall of the accommodating cavity 101 and the first heat exchange member 31.

The first heat exchange member 31 may be a heat exchange plate. Specifically, the first heat exchange member 31 is vertically formed in a shape of a rectangular plate. At least one surface of the first heat exchange member 31 in the thickness direction is bonded to the cell group 21 to exchange heat with the cell group 21. A first heat exchange flow channel may be formed on the inner side of the first heat exchange member 31, and the first heat exchange flow channel may extend linearly or in a meandering manner. The first heat exchange member 31 may alternatively be a heat exchange flat tube, and a first heat exchange flow channel is defined inside the heat exchange flat tube.

The first heat exchange member 31 may further be formed with a first liquid inlet joint and a first liquid outlet joint communicating with the first heat exchange flow channel. The first liquid inlet joint and the first liquid outlet joint are disposed on two ends of the first heat exchange member 31 in the second direction X respectively. The first liquid inlet joints of the plurality of first heat exchange members 31 are sequentially connected in the first direction Y, and the first liquid outlet joints of the plurality of first heat exchange members 31 are sequentially connected in the first direction Y. In this case, the first heat exchange flow channels of the plurality of first heat exchange members 31 are disposed in parallel.

For the first heat exchange member 31 disposed between two adjacent cell groups 21, two surfaces of the first heat exchange member 31 in the thickness direction are bonded to the two cell groups 21 respectively for heat exchange. Disposing the first heat exchange member 31 between adjacent cell groups 21 can increase the heat exchange area between the plurality of first heat exchange members 31 and the battery assembly 20, improving the heat exchange efficiency.

For the two first heat exchange members 31 disposed on two sides of the cell group 21 in the first direction Y, one surface of the first heat exchange member 31 is bonded to the cell group 21 for heat exchange, and the other surface of the first heat exchange member 31 is bonded to the phase change material member 40 for heat exchange. The cell group 21 facing toward the phase change material member 40 is set as a first cell group 21a herein.

It should be noted that in a case that the phase change material member 40 is not disposed between the first heat exchange member 31 and the side wall of the accommodating cavity 101, for example, a thermal insulation pad is disposed between the first heat exchange member 31 and the side wall of the accommodating cavity 101, when the plurality of first heat exchange members 31 heat the battery assembly 20, for the first heat exchange member 31 disposed adjacent to the thermal insulation pad, the first heat exchange member 31 only heats the first cell group 21a, while the remaining first heat exchange members 31 heat the cell groups 21 on two sides respectively. The heating speed of the first cell group 21a is fast, so the temperature of the first cell group 21a rises quickly, and the temperature of the first cell group 21a is higher than that of the remaining cell groups 21, resulting in faster temperature rise.

In the embodiments, the phase change material member 40 is disposed between the first heat exchange member 31 and the side wall of the accommodating cavity 101, and the phase change material member 40 can separate the first heat exchange member 31 from the side wall of the accommodating cavity 101, thereby reducing the heat loss of the first heat exchange member 31 and the first cell group 21a.

In addition, when the plurality of first heat exchange members 31 heat the battery assembly 20, the phase change material member 40 can absorb heat simultaneously. Since the phase change material member 40 has high heat capacity, it can continuously absorb heat until reaching a heat saturation state. In this case, the first heat exchange member 31 disposed between the phase change material member 40 and the first cell group 21a can simultaneously heat the phase change material member 40 and the first cell group 21a. In this way, the temperature rise rate of the first cell group 21a can be reduced, so that the temperature of the battery cells 211 of the first cell group 21a is not too high and remains within an appropriate temperature range, reducing the temperature difference with the remaining cell groups 21.

When the plurality of first heat exchange members 31 stop heating, since the heated phase change material member 40 has high latent heat, it can continuously release heat, so as to provide active thermal preservation for the first cell group 21a, reduce the heat dissipation rate of the first cell group 21a, and reduce the temperature difference between the first cell group 21a and the remaining cell groups 21, improving the temperature uniformity of the battery 100.

In the foregoing technical solution, since the plurality of first heat exchange members 31 are disposed between adjacent cell groups 21 and the phase change material member 40 is disposed between the side wall of the accommodating cavity 101 and the first heat exchange member 31, when the first heat exchange member 31 heats the battery assembly 20, the phase change material member 40 can absorb heat from the first heat exchange member 31, reducing the temperature rise rate of the cell groups 21 on the peripheral side of the battery assembly 20. When the first heat exchange member 31 stops heating, the phase change material member 40 can release heat, reducing the heat dissipation rate of the cell groups 21 on the peripheral side of the battery assembly 20, thereby reducing the temperature difference between the cell groups 21 on the peripheral side of the battery assembly 20 and the remaining cell groups 21, and improving the temperature uniformity of the battery assembly 20.

In some embodiments of this application, as shown in FIG. 9, the phase change material member 40 is disposed on two opposite sides of the battery assembly 20 in a first direction Y.

The phase change material member 40 is provided in two, and the two phase change material members 40 are disposed on two sides of the battery assembly 20 in the left-right direction respectively. The phase change material member 40 is disposed vertically. One side surface in the left-right direction is bonded to the first cell group 21a and the other side surface is bonded to the beam body 111 of the box 10.

In the foregoing technical solution, with the second heat exchange member 32 disposed at the top and bottom of the battery assembly 20, the second heat exchange member 32 can simultaneously exchange heat with the plurality of cell groups 21, reducing space occupation while ensuring the heat exchange efficiency, and facilitating the assembly of the second heat exchange member 32. Since the phase change material member 40 is disposed on two sides of the battery assembly 20, the phase change material member 40 can directly exchange heat with the second heat exchange member 32 or indirectly exchange heat with the second heat exchange member 32 through the box 10, and absorb heat from the second heat exchange member 32, so as to reduce the temperature rise rate and heat dissipation rate of the battery cells 211 on the peripheral side of the battery assembly 20, thereby improving the temperature uniformity of the battery assembly 20.

In some embodiments of this application, the second heat exchange member 32 may include a heat exchange tube 321. The heat exchange tube 321 extends in a reciprocating manner along the first direction Y. Both ends of the heat exchange tube 321 in the first direction Y extend beyond a side of the phase change material member 40 facing away from the battery assembly 20.

That is, when the phase change material member 40 and the battery assembly 20 serve as an integral structure, two ends of the heat exchange tube 321 in the first direction Y exceed two ends of the integral structure respectively.

The second heat exchange member 32 may include one, two, three, or more heat exchange tubes 321. Each heat exchange tube 321 may include a plurality of straight tube sections 3211. The plurality of straight tube sections 3211 extend along the first direction Y and are spaced apart in the second direction X. The plurality of straight tube sections 3211 are sequentially connected in the second direction X. Two adjacent straight tube sections 3211 are connected by a bent section 3212. The bending angle of the bent section 3212 is 180 degrees. Further, the bent section 3212 extends along an arc line protruding away from the straight tube section 3211. At least part of the bent section 3212 is located on the side of the phase change material member 40 facing away from the battery assembly 20. Thus, the uniformity of heating of the plurality of batteries 100 of the battery assembly 20 by the second heat exchange member 32 can be improved, improving the temperature uniformity.

When the second heat exchange member 32 is disposed inside the box 10 at the top or bottom of the battery assembly 20, to facilitate the connection of the heat exchange tube 321 with a current collector or an external circulation pipeline, both the water inlet end and the water outlet end of the heat exchange tube 321 need to pass through the beam body 111 to connect to the current collector or the external pipeline. The beam body 111 of the box 10 is generally a metal material member with good heat transfer effect but low heat capacity. Among the plurality of cell groups 21, the cell group 21 located on the peripheral side of the battery assembly 20 and facing toward the water inlet end and the water outlet end of the heat exchange tube 321 is set as the first cell group 21a.

When the second heat exchange member 32 is used to heat the battery assembly 20, the heat exchange fluid enters the straight tube section 3211 and the bent section 3212 through the water inlet end of the heat exchange tube 321 and exchanges heat with the battery assembly 20. Since the water inlet end of the heat exchange tube 321 passes through the beam body 111 of the box 10, heat of the heat exchange fluid in the water inlet end of the heat exchange tube 321 can be transferred to the beam body 111 through the tube wall of the heat exchange tube 321 to heat the beam body 111. Due to the low heat capacity and fast temperature rise rate of the beam body 111, the beam body 111 quickly reaches thermal equilibrium.

When the phase change material member 40 is not disposed between the beam body 111 and the first cell group 21a, since the beam body 111 has a high temperature, the beam body 111 transfers heat to the battery cells 211 in the first cell group 21a. In this way, the battery cells 211 of the first cell group 21a are heated by both the second heat exchange member 32 at the bottom or top and the beam body 111. In this case, the temperature rise rate of the battery cells 211 of the first cell group 21a is faster, resulting in a large temperature difference with the remaining cell groups 21.

In the embodiments of this application, the phase change material member 40 is disposed between the first cell group 21a and the beam body 111 or inside the beam body 111. The phase change material member 40 can absorb heat from the beam body 111, reduce the temperature rise rate of the beam body 111, reduce the heating effect of the beam body 111 on the battery cells 211 of the first cell group 21a, and reduce the temperature difference between the battery cells 211 of the first cell group 21a and the remaining cell groups 21. After the second heat exchange member 32 stops heating, the phase change material member 40 can provide thermal preservation, reduce the heat dissipation rate of the first cell group 21a, and reduce the temperature between the first cell group 21a and the remaining cell groups 21, improving the temperature uniformity.

In addition, the heat exchange tube 321 extends beyond the side of the phase change material member 40 facing away from the battery assembly 20, so that the phase change material member 40 can be located above the heat exchange tube 321. In this way, the phase change material member 40 can be in direct contact with the heat exchange tube 321 for heat exchange, store heat, and provide thermal insulation when the second heat exchange member 32 stops heating.

In the foregoing technical solution, since the second heat exchange member 32 includes the heat exchange tube 321 extending in a reciprocating manner and both ends of the heat exchange tube 321 exceed the phase change material member, during heating, the heat exchange tube 321 can simultaneously heat the phase change material member 40 and the battery cells 211. After heating is stopped, the phase change material member 40 can provide thermal preservation for the cell groups 21 on the peripheral side of the battery assembly 20, thereby improving the temperature uniformity of the battery assembly 20.

According to a second aspect, the embodiments of this application further provide an electric device 1, including the battery 100 according to any one of the foregoing embodiments.

In the foregoing technical solution, since the electric device 1 is provided with the battery 100, and the peripheral side of the battery assembly 20 is provided with the phase change material member 40, the phase change material member 40 can store or release heat when the thermal management member 30 exchanges heat with the battery assembly 20, so as to reduce the temperature change rate of the battery cells 211 on the peripheral side of the battery assembly 20 and make the temperature change rates of various portions of the battery assembly 20 tend to be consistent. When the thermal management member 30 stops exchanging heat with the battery assembly 20, the phase change material member 40 can provide thermal preservation for the battery cells 211 on the peripheral side of the battery assembly 20, so that the heat dissipation rate of the battery cells 211 on the peripheral side tends to be consistent with that of the remaining battery cells 211, thereby improving the temperature uniformity of the battery assembly 20, prolonging the service life of the battery 100, and improving the overall performance of the electric device 1.

The following describes a battery 100 according to a specific embodiment of this application with reference to FIGs. 2 to 9.

Referring to FIG. 1, the battery 100 includes a box 10, a battery assembly 20, a thermal management member 30, a phase change material member 40, and a bottom guard plate 50.

Specifically, as shown in FIG. 1, the box 10 includes a first portion 11 and a second portion 12. The first portion 11 defines an accommodating cavity 101 that is open on the upper side. The second portion 12 is in a shape of a plate and covers the upper side of the first portion 11. The first portion 11 and the second portion 12 fit together to define the accommodating cavity 101.

The first portion 11 includes a beam body 111 and a bottom plate 112. The beam body 111 includes a frame beam 1111 and a partition beam 1112. The frame beam 1111 is a rectangular ring. The bottom plate 112 is connected to the bottom of the beam body 111. The bottom plate 112 covers the bottom of the frame beam 1111. The partition beam 1112 is disposed on the inner side of the frame beam 1111. The partition beam 1112 is provided in two. The two partition beams 1112 extend in the front-rear direction and are spaced apart in the left-right direction.

The battery assembly 20, the thermal management member 30, and the phase change material member 40 are all disposed on the upper side of the bottom plate 112 and located between the two partition beams 1112. The bottom guard plate 50 is disposed on the lower side of the bottom plate 112 and is fixed to the bottom plate 112. The battery assembly 20 includes a plurality of cell groups 21. Each cell group 21 includes a plurality of battery cells 211 arranged sequentially in the front-rear direction. The plurality of cell groups 21 are arranged sequentially in the left-right direction.

The thermal management member 30 includes a first heat exchange member 31 and a second heat exchange member 32. The first heat exchange member 31 is provided in plurality. The plurality of first heat exchange members 31 are cold plate structures vertically disposed and extending in the front-rear direction. The plurality of first heat exchange members 31 and the plurality of cell groups 21 are alternately arranged in the left-right direction, and the first heat exchange members 31 are disposed on both sides of the battery assembly 20 in the left-right direction.

The second heat exchange member 32 is horizontally disposed at the bottom of the battery assembly 20 and includes a heat exchange tube 321. The heat exchange tube 321 is a flat tube. The heat exchange tube 321 may include a plurality of straight tube sections 3211 and a plurality of bent sections 3212. The plurality of straight tube sections 3211 extend in the left-right direction and are spaced apart in the front-rear direction. The plurality of straight tube sections 3211 are sequentially connected in the front-rear direction. Two adjacent straight tube sections 3211 are connected by a bent section 3212. The bending angle of the bent section 3212 is 180 degrees.

The phase change material member 40 is disposed between the partition beam 1112 and the first heat exchange member 31, or the phase change material member 40 is disposed in a mold cavity 1101 of the partition beam 1112. The phase change material member 40 includes a housing 41, a phase change material 42, and an adsorption member. The housing 41 is an aluminum-plastic film housing 41. The phase change material 42 and the adsorption member are both disposed in the housing 41. The phase change material 42 is a solid-liquid phase change material 42, such as paraffin or a supersaturated salt solution, and is between a solid phase and a liquid phase within a preset operating temperature range of the battery assembly 20. The adsorption member is a graphite member or a cotton fabric member for adsorbing the liquid phase change material 42.

In the foregoing technical solution, since the phase change material member 40 is disposed on both the left and right sides of the battery assembly 20, the phase change material member 40 can store or release heat when the thermal management member 30 exchanges heat with the battery assembly 20, so as to reduce the temperature change rate of the battery cells 211 on the peripheral side of the battery assembly 20 and make the temperature change rates of various portions of the battery assembly 20 tend to be consistent. When the thermal management member 30 stops exchanging heat with the battery assembly 20, the phase change material member 40 can provide thermal preservation for the battery cells 211 on the peripheral side of the battery assembly 20, so that the heat dissipation rate of the battery cells 211 on the peripheral side tends to be consistent with that of the remaining battery cells 211, thereby improving the temperature uniformity of the battery assembly 20 and prolonging the service life of the battery 100.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions in the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery, comprising:
a box (10), wherein the box (10) has an accommodating cavity (101);
a battery assembly (20), wherein the battery assembly (20) is disposed in the accommodating cavity (101);
a thermal management member (30), wherein the thermal management member (30) is configured to heat and cool the battery assembly (20), the thermal management member (30) comprises a second heat exchange member (32), and the second heat exchange member (32) is disposed between the battery assembly (20) and a top wall and/or a bottom wall of the accommodating cavity (101); and
a phase change material member (40), wherein the phase change material member (40) extends along a circumferential direction of the battery assembly (20) and is disposed on a peripheral side of the battery assembly (20) to exchange heat with battery cells (211) on the peripheral side of the battery assembly (20).

2. The battery according to claim 1, wherein the phase change material member (40) is disposed between the battery assembly (20) and a side wall of the accommodating cavity (101).

3. The battery according to claim 2, wherein the phase change material member (40) comprises a housing (41) and a phase change material (42), the housing (41) defines a cavity (401), and the phase change material (42) fills the cavity (401).

4. The battery according to claim 3, wherein the housing (41) comprises a metal layer and insulating film layers, and the insulating film layers are disposed on two surfaces of the metal layer in a thickness direction.

5. The battery according to claim 3 or 4, wherein the housing (41) comprises a first half-shell (411) and a second half-shell (412), the first half-shell (411) and the second half-shell (412) are arranged in a thickness direction of the phase change material member (40), and a peripheral edge of the first half-shell (411) and a peripheral edge of the second half-shell (412) are hermetically bonded in a thickness direction of the housing (41) and fit together to define the cavity (401).

6. The battery according to any one of claims 1 to 5, wherein the phase change material member (40) comprises a phase change material (42), and the phase change material (42) is configured to undergo a solid-liquid phase change within a preset operating temperature range of the battery assembly (20).

7. The battery according to claim 6, wherein the phase change material (42) is paraffin or a supersaturated salt solution.

8. The battery according to claim 6 or 7, wherein the phase change material member (40) further comprises an adsorption member, and the adsorption member is configured to be suitable for adsorbing the liquid phase change material (42).

9. The battery according to claim 8, wherein the adsorption member is a porous material member.

10. The battery according to any one of claims 1 to 9, wherein the box (10) comprises a beam body (111), the beam body (111) encloses the accommodating cavity (101), the beam body (111) has mold cavities (1101) inside, and the phase change material member (40) is disposed in at least some of the mold cavities (1101).

11. The battery according to any one of claims 1 to 10, wherein the phase change material member (40) is provided in plurality, and the plurality of phase change material members (40) are spaced apart in the circumferential direction of the battery assembly (20).

12. The battery according to any one of claims 1 to 11, wherein the battery assembly (20) comprises a plurality of cell groups (21), the plurality of cell groups (21) are arranged sequentially in a first direction (Y), and each cell group (21) comprises a plurality of battery cells (211) arranged sequentially in a second direction (X),
wherein the phase change material member (40) is disposed on two opposite sides of the battery assembly (20) in the first direction (Y), and/or the phase change material member (40) is disposed on two opposite sides of the battery assembly (20) in the second direction (X), the first direction (Y) being perpendicular to the second direction (X).

13. The battery according to claim 12, wherein the thermal management member (30) comprises a first heat exchange member (31), the first heat exchange member (31) extends along the second direction (X), the first heat exchange member (31) is disposed between two adjacent cell groups (21) and on both sides of the battery assembly (20) in the first direction (Y), and the phase change material member (40) is disposed between a side wall of the accommodating cavity (101) and the first heat exchange member (31).

14. The battery according to any one of claims 1 to 13, wherein the phase change material member (40) is disposed on two opposite sides of the battery assembly (20) in a first direction (Y).

15. The battery according to claim 14, wherein the second heat exchange member (32) comprises a heat exchange tube (321), the heat exchange tube (321) extends in a reciprocating manner along the first direction (Y), and both ends of the heat exchange tube (321) in the first direction (Y) extend beyond a side of the phase change material member (40) facing away from the battery assembly (20).

16. An electric device, comprising the battery (100) according to any one of claims 1 to 15.
